# EUROPÄISCHE PATENTSCHRIFT

(11) **EP 2 377 639 B1**
(45) Veröffentlichungstag und Bekanntmachung des Hinweises auf die Patenterteilung: **05.08.2015**
(21) Anmeldenummer: 11157824.1
(22) Anmeldetag: 11.03.2011
(51) Int. Cl.: B23K 26/08, B23K 26/38, B23K 37/04

(54) **Laserbearbeitungsmaschine zur wahlweisen Bearbeitung von plattenartigen oder von rohrförmigen Werkstücken ; Verfahren zum Umrüsten derselben**
Machine for laser processing either flat or cylindrical workpieces ; Method of customising such machine
Machine pour l'usinage par laser de pièces planes ou cylindriques ; Procédé de rééquipement d'une telle machine

(30) Priorität: 19.04.2010 DE 102010027927
(43) Veröffentlichungstag der Anmeldung: 19.10.2011
(73) Patentinhaber: TRUMPF Werkzeugmaschinen GmbH + Co. KG, 71254 Ditzingen (DE)
(72) Erfinder: Keel, Urs, 7310, Bad Ragaz (CH); Fischli, Alois, 8887, Mels (CH); Siegrist, Erich, 7015, Tamins (CH); Fluetsch, Urs, 7252, Klosters Dorf (CH)
(74) Vertreter: Kohler Schmid Möbus Patentanwälte

(56) Entgegenhaltungen:
- CH-A5- 677 332
- DE-A1- 10 249 106
- IT-A1- TO 961 019
- JP-A- 10 058 182
- US-A1- 2008 121 628

## Beschreibung

Die vorliegende Erfindung betrifft eine Laserbearbeitungsmaschine, insbesondere eine Laser-Flachbettmaschine, zur wahlweisen Bearbeitung von plattenartigen oder rohrförmigen Werkstücken gemäß dem Oberbegriff des Anspruchs 1 und ein Verfahren zum Umrüsten einer Laserbearbeitungsmaschine gemäß dem Oberbegriff des Anspruchs 9 (siehe, z.B., JP 101 58 182).

Um mit einer Laserbearbeitungsmaschine an einem Werkstück eine Kontur schneiden zu können, müssen der Laserstrahl und das Werkstück eine Relativbewegung zueinander ausführen. Während der Bearbeitung werden dazu entweder der Laserschneidkopf oder das Werkstück oder beide bewegt. Die Bewegung kann jeweils in einer oder mehreren Achsen erfolgten, je nachdem, ob ein plattenartiges oder ein dreidimensionales Werkstück bearbeitet wird.

Die Ausführung der Laserbearbeitungsmaschine bestimmt das Werkstückspektrum, das geschnitten werden kann. Bei dem bearbeiteten Werkstückmaterial kann es sich um flache Blechtafeln, Rohre und Profile oder vorgeformte, dreidimensionale Werkstücke handeln. Flache Blechtafel, Rohre und Profile sind als Halbzeuge in zahlreichen Materialarten und Materialstärken erhältlich und werden in Standardabmessungen geliefert.

Am häufigsten werden Laser eingesetzt, um Teile aus ebenen Blechtafeln zu schneiden. Bei zweidimensionalen Teilen genügt eine Bewegung in der Ebene, um alle Punkte auf der Blechtafel anzufahren. Sogenannte Flachbett-Laserschneidanlagen sind zu diesem Zweck am gebräuchlichsten. Bei diesen Anlagen ruht bei der Bearbeitung das Werkstück auf einem Bearbeitungstisch und der Laserbearbeitungskopf wird in einer (X-Y)-Ebene innerhalb eines vordefinierten Bearbeitungsbereichs der Laserbearbeitungsmaschine über dem Werkstück verfahren, um alle zu bearbeitenden Punkte auf der Blechtafel zu erreichen. Der Bearbeitungsbereich stimmt hierbei mit dem Bereich überein, in dem der Laserbearbeitungskopf zur Werkstückbearbeitung in der (X-Y)-Ebene bewegt werden kann.

Laser-Flachbettmaschinen können um eine Rundachse erweitert werden, um eine Bearbeitung von Rohren und profilierten Werkstücken zu ermöglichen. Zu diesem Zweck wird die Werkstückauflage für ebene Bleche (sog. "Palette", in der Regel ein Stützrost) aus dem Bearbeitungsbereich der Laserbearbeitungsmaschine gefahren. In den Bearbeitungsbereich wird dann eine zusätzliche Handhabungseinrichtung eingesetzt, welche ein drehbares Spannfutter aufweist, das eine zusätzliche Rundachse bildet, die - in Verbindung mit den Maschinenachsen - die Bearbeitung am sich drehenden Werkstück ermöglicht. Eine derartige Laserbearbeitungsmaschine ist in der EP0548006 A2 beschrieben worden, wobei ein Reitstock, der an einem dem Spannfutter gegenüber liegenden Ende des Werkstücks festlegbar ist, zur Führung des Werkstücks dient.

Eine ähnliche Vorrichtung wird von der Anmelderin unter dem Namen "RotoLas" als Option für Laser-Flachbettmaschinen angeboten. Zusätzlich zur Rundachse (Drehfutter) werden im Bearbeitungsbereich ein oder mehrere (bis zu drei) Auflager montiert, die dafür sorgen, dass das Rohr in Bearbeitungsnähe sicher geführt wird. Das/die Auflager ist/sind durch einen Pneumatik-Zylinder als Antrieb (gemeinsam) in Rohrlängsrichtung verschiebbar, allerdings bezogen auf den Bearbeitungsbereich von ca. 3000 mm nur um einen relativ kleinen Bereich von ca. 220 mm, um das Werkstück auch in Totbereichen bearbeiten zu können, die ansonsten bei der Bearbeitung z.B. von Rechteckrohren durch die scheibenförmigen Auflagen an den Auflagern entstehen können.

Nachteilig an den oben beschriebenen Vorrichtungen ist es, dass das Umrüsten vom Bearbeitungsbetrieb zum Bearbeiten von plattenartigen Werkstücken auf den Rohr/Profilbearbeitungsbetrieb mit einem vergleichsweise hohen Aufwand verbunden ist. Ferner ist die Positionierung der Auflager - falls sie überhaupt verschoben werden können - nicht flexibel.

### Aufgabe der Erfindung

Es ist die Aufgabe der vorliegenden Erfindung, eine Laserbearbeitungsmaschine der eingangs genannten Art und ein zugehöriges Verfahren zum Umrüsten einer Laserbearbeitungsmaschine dahingehend weiterzubilden, dass die Flexibilität bei der Rohrbearbeitung erhöht wird.

### Gegenstand der Erfindung

Die Erfindung definiert eine Laserbearbeitungsmaschine gemäß dem Anspruch 1.

Erfindungsgemäß ist die Stützeinrichtung mit einer Antriebseinrichtung ausgestaltet, die es ermöglicht, die Stützeinrichtung über den Bearbeitungsbereich in Rohrlängsrichtung automatisch und gesteuert zu verfahren, wobei die Verschiebung zumindest über eine Länge möglich sein soll, die zumindest 20 %, des Bearbeitungsbereichs entspricht und die typischer Weise höchstens ca. 80 % bis 90% der Gesamtlänge des Bearbeitungsbereichs entspricht. Der Bearbeitungsbereich hängt von der Größe der zu bearbeitenden Werkstücke ab und liegt z.B. bei Blechtafeln in Form von sog. Kleintafeln bei 1000 mm x 2000 mm, bei sog. Mitteltafeln bei ca. 1250 mm x 2500 mm und bei Großtafeln bei ca. 1500 mm x 3000 mm. Die Länge, über die die Stützeinrichtung in Längsrichtung gesteuert bewegbar ist, hängt davon ab, wie viele Stützeinrichtungen in Längsrichtung des rohrförmigen Werkstücks angeordnet sind. Es hat sich als vorteilhaft herausgestellt, wenn die Stützeinrichtung mindestens über eine Länge von ca. 50 % des Bearbeitungsbereichs gesteuert bewegbar ist.

Die Bewegung der Stützeinrichtung und die Bewegung des Laserbearbeitungskopfs erfolgt koordiniert so dass das rohrförmige Werkstück von der Stützeinrichtung stets an einer für die Bearbeitung optimierten Stellte unterstützt werden kann. Es versteht sich, dass im Sinne dieser Anmeldung unter rohrförmigen Werkstücken auch profilierte Werkstücke verstanden werden, die in ein drehbares Spannfutter der Handhabungseinrichtung eingespannt und zur Bearbeitung um eine von diesem gebildete Drehachse in Rotation versetzt werden können.

Gemäß der Erfindung ist die Stützeinrichtung an der Verschiebeeinrichtung für den Werkstücktisch festlegbar. Die Verschieberichtung für den Werkstücktisch erlaubt die Verschiebung des Werkstücktischs in Längsrichtung des Bearbeitungsbereichs, welche auch die Längsrichtung des rohrförmigen Werkstücks bildet. Der Antrieb der Verschiebeeinrichtung für den Werkstücktisch, der bei der Rohrbearbeitung nicht benötigt wird, kann daher in vorteilhafter Weise zur Bewegung der Stützeinrichtung in Werkstücklängsrichtung genutzt werden.

Bei einer Ausführungsform weist die Verschiebeeinrichtung zur Bewegung des Werkstücktisches und/oder zur Bewegung des Laserbearbeitungskopfs einen Kettenantrieb auf. Ein Kettenantrieb hat sich insbesondere zur Verschiebung des Werkstücktisches als günstig erwiesen, da mit Hilfe des Kettenantriebs in einem Arbeitsgang sowohl ein erster Werkstücktisch aus dem Bearbeitungsbereich in eine Be- und Entladestellung außerhalb des Bearbeitungsbereichs verbracht werden kann als auch ein zweiter Werkstücktisch von der Be- und Entladestellung in den Bearbeitungsbereich bewegt werden kann.

In einer Weiterbildung weist der Kettenantrieb eine Kette mit mindestens einem Mitnehmer auf, an dem die Stützeinrichtung festlegbar ist. Der Mitnehmer kann in eine Mitnehmer-Aufnahme an der Stützeinrichtung eingreifen, um die Stützeinrichtung an der Verschiebeeinrichtung festzulegen. Zu diesem Zweck können dieselben Mitnehmer verwendet werden, die auch zum Festlegen des Werkstücktisches dienen, oder es können an der Kette zusätzliche Mitnehmer für die Stützeinrichtung vorgesehen werden.

In einer weiteren Ausführungsform weist zur Festlegung an einer Kette des Kettenantriebs die Stützeinrichtung eine Kopplungseinrichtung auf, die mit der Kette verhakt. Die sich verhakende Kopplungseinrichtung greift unmittelbar an den Kettengliedern der Kette an und kann somit an beliebiger Position an der Kette festgelegt werden. Insbesondere kann bei dieser Ausführungsform auch auf das Vorsehen von zusätzlichen Mitnehmer an der Kette verzichtet werden, die zur Kopplung der Stützeinrichtung dienen sollen. Um eine besonders einfache Kopplung zwischen der Kette und der Kopplungseinrichtung zu gewährleisten, kann die Kopplungseinrichtung eine Klinke aufweisen, die es ermöglicht, einen zwischen die Kettenglieder eingreifenden Haken anzuheben oder abzusenken, um die Kopplungseinrichtung mit der Kette zu verhaken oder die Verhakung zu lösen.

In einer weiteren Ausführungsform weist die Laserbearbeitungsmaschine eine Führungseinrichtung zur Führung der Stützeinrichtung bei der Verschiebung innerhalb des Bearbeitungsbereichs auf. Die Führung kann z.B. in Form einer in Rohr-Längsrichtung verlaufenden Führungsschiene ausgebildet sein, an der die Stützeinrichtung z.B. über einen Führungsschlitten angebracht werden kann. Auf diese Weise kann die Stützeinrichtung mit großer Präzision in Rohr-Längsrichtung bewegt werden.

Bei einer weiteren Ausführungsform bildet die Stützeinrichtung ein Auflager für das rohrförmige Werkstück. Das Auflager dient der Unterstützung des rohrförmigen Werkstücks bei der Bearbeitung. Es versteht sich, dass für unterschiedlich profilierte rohrförmige Werkstücke unterschiedliche Arten von Auflagern verwendet werden müssen. Es ist daher günstig, wenn die Stützeinrichtung in Form des Auflagers zumindest zweigeteilt ist und einen Grundträger aufweist, der mit der Verschiebeeinrichtung und ggf. mit der Führung verbindbar ist, sowie einen Werkstückträger, der mit dem Grundträger verbindbar ist, und der an das jeweils zu bearbeitende rohrförmige Werkstück angepasst ist.

Bei einer alternativen Ausführungsform bildet die Stützeinrichtung ein Durchschiebefutter für das rohrförmige Werkstück. Das Durchschiebefutter weist eine Mehrzahl von (typischer Weise vier oder mehr) Spannbacken auf, die mit Rollen versehen sind und hat im Gegensatz zur Verwendung von Auflagern den Vorteil, dass das Durchschiebefutter eine Drehung des Werkstücks mitmacht, so dass keine individuelle Anpassung an die jeweilige Querschnitt-Geometrie des rohrförmigen Werkstücks erfolgen muss. Somit kann auf die Verwendung von Distanzstücken, wie sie bei Auflagern zur Aufnahme von Rundrohren mit unterschiedlichen Durchmessern benötigt werden, verzichtet werden. Ebenso kann auf die Herstellung von Grundscheiben und Fixierplatten passend zur Rohrdimension von Rechteckrohren verzichtet werden, die um das rohrförmige Werkstück herum fixiert werden müssen.

Typischer Weise weist die Laserbearbeitungsanlage ein drehbares Spannfutter zum Einspannen des rohrförmigen Werkstücks bei der Bearbeitung auf. Das Spannfutter bildet eine Drehachse für die Bearbeitung des rohrförmigen Werkstücks, um welche das Werkstück bei der Bearbeitung gedreht werden kann. Durch das drehbare Spannfutter kann ein rohrförmiges Werkstück von einer Beschickungsanlage aus eingeführt und in den Bearbeitungsbereich eingebracht werden. Das Spannfutter kann dauerhaft, d.h. auch während der Bearbeitung von plattenförmigen Werkstücken an der Laserbearbeitungsanlage angebracht sein. Alternativ ist es auch möglich, dass das Spannfutter erst in die Laserbearbeitungsmaschine eingebracht wird, wenn eine Bearbeitung von rohrförmigen Werkstücken erfolgen soll.

Gemäß der Erfindung umfasst die Laserbearbeitungsmaschine einen innerhalb des Bearbeitungsbereichs bewegbaren Laserbearbeitungskopf. Typischer Weise ist der Laserbearbeitungskopf in dem Bearbeitungsbereich sowohl in Längsrichtung (X-Achse) als auch in Querrichtung (Y-Achse) verschiebbar (sog. fliegende Optik). Der Bearbeitungsbereich wird hierbei definiert durch alle Orte, die der Laserbearbeitungskopf in der XY-Ebene zur Laserbearbeitung anfahren kann. T Der Laserbearbeitungskopf kann hierbei an einer in Längsrichtung (X-Richtung) verschiebbaren Brücke vorgesehen und entlang dieser Brücke in Querrichtung (Y-Richtung) verschiebbar sein.

Gemäß der Erfindung umfasst die Laserbearbeitungsmaschine eine Steuerungseinrichtung zur Koordinierung der Bewegung des Laserbearbeitungskopfs und der Stützeinrichtung in Längsrichtung des rohrförmigen Werkstücks. Eine solche koordinierte Bewegung ist günstig, wenn die Stützeinrichtung und der Laserbearbeitungskopf individuell über zwei getrennt steuerbare Antreibe angesteuert werden können, z.B. wenn die Stützeinrichtung an der Verschiebeeinrichtung für den Werkstücktisch festgelegt ist. Durch die koordinierte Bewegung kann stets die optimale Position für die Unterstützung des Werkstücks angefahren werden. Diese liegt einerseits möglichst nahe am Laserbearbeitungskopf, um eine möglichst große Genauigkeit zu erreichen (rohrförmige Werkstücke sind in der Regel nicht vollständig gerade und weisen in der Regel in Rohrlängsrichtung einen geringfügig variierenden Durchmesser auf), andererseits ist die optimale Position so weit vom Schneidkopf entfernt, dass Kollisionen zwischen der Stützeinrichtung und der Schneidkontur vermieden werden können.

Ein weiterer Aspekt der Erfindung betrifft ein Verfahren zum Umrüsten einer Laserbearbeitungsmaschine zur Bearbeitung von plattenförmigen Werkstücken für die Bearbeitung von rohrförmigen Werkstücken gemäß dem Anspruch 9.

Bei einer vorteilhaften Variante des Verfahrens wird die Stützeinrichtung an einer Verschiebeeinrichtung für die Werkstückauflage oder an einer Verschiebeeinrichtung für einen Laserbearbeitungskopf festgelegt. Auf diese Weise kann der Antrieb der jeweiligen Verschiebeeinrichtung zur Bewegung bzw. Verschiebung der Stützeinrichtung genutzt werden.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung einer Ausführungsform einer erfindungsgemäßen Laserbearbeitungsmaschine zum wahlweisen Bearbeiten von plattenartigen oder rohrförmigen Werkstücken,
- Fig. 2: eine schematische Darstellung eines Auflager zur Abstützung eines rohrförmigen Werkstücks, das an einer Kette einer Verschiebeeinrichtung zur Bewegung eines Werkstücktisches festgelegt ist,
- Fign. 3a,b: zwei Detaildarstellungen der Kette von Fig. 2 mit einer Mehrzahl von Mitnehmern,
- Fig. 4: eine Darstellung entsprechend Fig. 3b, bei welcher eine Mitnehmer-Aufnahme an einem Mitnehmer der Kette eingreift, um den Werkstücktisch in einen Bearbeitungsbereich zu verbringen, sowie
- Fig. 5: eine schematische Darstellung eines rohrförmigen Werkstücks, welches bei der Laserbearbeitung von einem Durchschiebefutter gestützt wird.

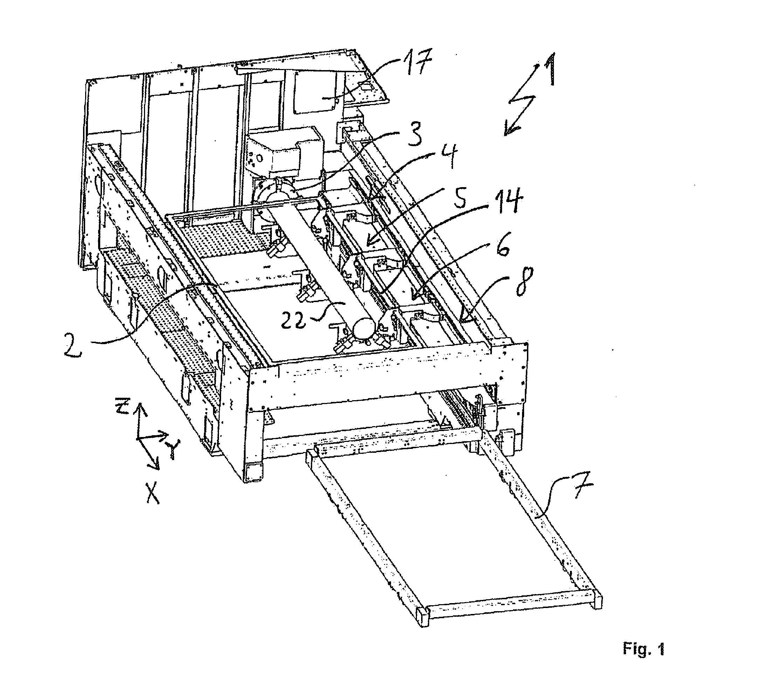

Fig. 1 zeigt einen Rahmen einer Laserbearbeitungsmaschine 1 in Form einer Laser-Flachbettmaschine zur wahlweisen Bearbeitung von plattenartigen oder von rohrförmigen Werkstücken. In der Darstellung von Fig. 1 ist die Laserbearbeitungsmaschine 1 zur Bearbeitung von rohrförmigen Werkstücken vorbereitet. Zu diesem Zweck ist am Rand eines als Rahmen dargestellten, rechteckigen Bearbeitungsbereichs 2 der Laserbearbeitungsmaschine 1 ein drehbares Spannfutter 3 angebracht, durch das ein rohrförmiges Werkstück 22 in den Bearbeitungsbereich 2 eingeführt werden kann. Das drehbare Spannfutter 3 definiert eine Drehachse, um die das rohrförmige Werkstück 22 bei der Bearbeitung gedreht werden kann. In Längsrichtung (X-Richtung) sind entlang des Bearbeitungsbereichs 2 drei Auflager 4, 5, 6 angeordnet, die der Abstützung des rohrförmigen Werkstücks 22 bei der Bearbeitung dienen und die so positioniert sind, dass die Mittelachse des rohrförmigen Werkstücks 22 in Längs- bzw. X-Richtung, d.h. horizontal und parallel zur Seitenwand der Laserbearbeitungsmaschine 1 ausgerichtet ist. Der Bearbeitungsbereich 2 weist im vorliegenden Fall eine Länge von 3000 mm und eine Breite von 1500 mm auf und dient der Bearbeitung von großformatigen Blechtafeln.

In Fig. 1 ist auch ein Rahmen eines Werkstücktischs 7 in einer Be- und Entladeposition außerhalb des Bearbeitungsbereichs 2 dargestellt, an der plattenartige Werkstücke bzw. Werkstückteile bei- und entladen werden können. Der Werkstücktisch 7 kann zur Bearbeitung von darauf gelagerten plattenartigen Werkstücken mittels eines als Verschiebeeinrichtung dienenden Kettenantriebs 8 in Längsrichtung (X-Richtung) von der Be- und Entladeposition in eine Bearbeitungsposition in dem Bearbeitungsbereich 2 verbracht werden, wie weiter unten näher beschrieben wird.

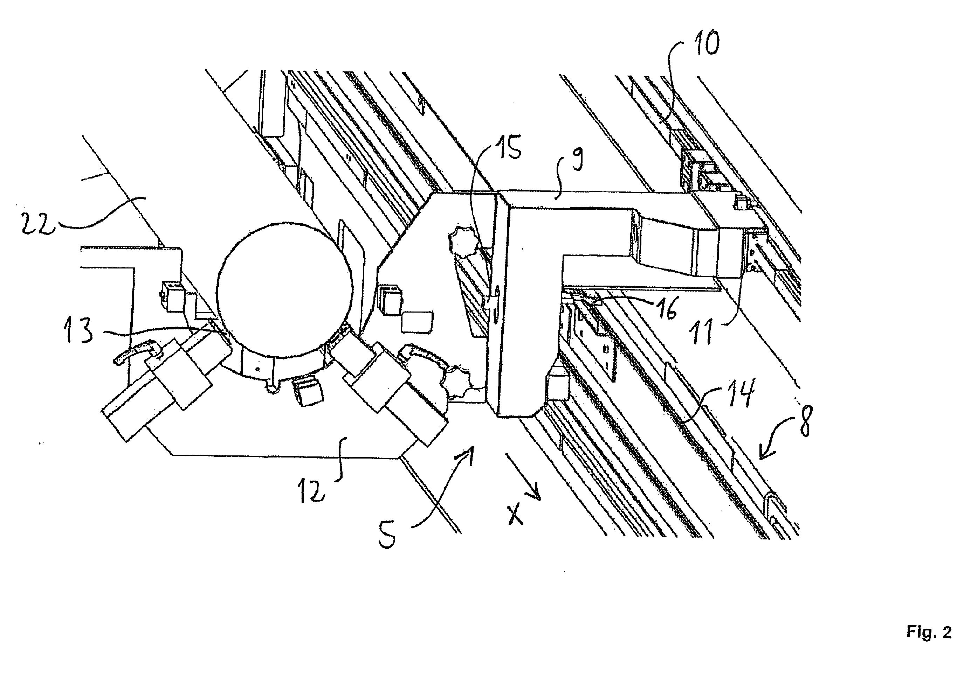

Der Kettenantrieb 8 wird für die Bearbeitung von rohrförmigen Werkstücken grundsätzlich nicht benötigt. Der Kettenantrieb 8 kann aber auch während der Rohrbearbeitung genutzt werden, um eines oder mehrere der Auflager 4, 5, 6 zu verschieben. Dieser Vorgang wird nachfolgend anhand des mittleren Auflagers 5, welches in **Fig. 2** im Detail dargestellt ist, näher beschrieben.

Das mittlere Auflager 5 weist einen Grundträger 9 auf, der an einem an einer Führungsschiene 10 verschiebbar gelagerten Schritten 11 festgeklemmt werden kann, um das Auflager 5 in X-Richtung zu führen. Zusätzlich wird das Auflager 5 an einer Kette 14 des Kettenantriebs 8 festgelegt, wozu der Grundträger 9 zunächst in die gewünschte Position in X-Richtung bewegt wird. An dem Grundträger 9 ist ein Werkstückträger 12 festgeklemmt bzw. verriegelt, an dem Rollen 13 angebracht sind, auf denen das rohrförmige Werkstück 22 bei der Bearbeitung aufliegt.

Bei dem in Fig. 2 gezeigten Beispiel weist das Auflager 5 eine Klinke 15 auf, die dem Anheben und Senken eines Hakens 16 dient, der an beliebiger Stelle in die Kette 14 des Kettenantriebs 8 einhaken kann. Durch den Haken 16 ist das Auflager 5 an der Kette 14 festgelegt und kann mittels des Kettenantriebs 8 in Längsrichtung (X-Richtung) gesteuert bewegt werden.

Da der Kettenantrieb 8 von einem (nicht gezeigten) Antrieb zur Bewegung eines Laserbearbeitungskopfes unabhängig ist, kann das mittlere Auflager 5 mittels einer in Fig. 1 dargestellten Steuerungseinrichtung 17 unabhängig vom Laserbearbeitungskopf bewegt werden. Beide Bewegungen können hierbei so koordiniert werden, dass das Auflager 5 stets an einer für die Bearbeitung bzw. die Unterstützung eines bestimmten Werkstück(typs) optimale Position in X-Richtung verbracht wird. Diese Position liegt einerseits möglichst nahe am Laserbearbeitungskopf, um eine möglichst große Genauigkeit zu erreichen, andererseits ist die optimale Position so weit vom Schneidkopf entfernt, dass Kollisionen zwischen dem Auflager 5 und der Schneidkontur vermieden werden könnten. Der Verfahrbereich des Auflagers 5 beträgt hierbei mehr als ca. 50 % der Länge des Bearbeitungsbereichs 2 in Längsrichtung (X-Richtung) und wird durch die weiteren (ortsfesten) Auflager 4, 6 begrenzt. Sofern wie in Fig. 1 gezeigt alle Auflager 4, 5, 6 an der Kette 14 des Kettenantriebs 8 festgelegt sind und gemeinsam verschoben werden, hängt die maximale Länge des Verfahrbereichs der Auflager 4, 5, 6 vom gegenseitigen Abstand der Auflager 4, 5, 6 ab. Der Verfahrbereich der Auflager 4, 5, 6 sollte aber mindestens 20 % der Gesamtlänge des Bearbeitungsbereichs 2 betragen, um genügend Flexibilität bei der Unterstützung des rohrförmigen Werkstücks 22 zu haben.

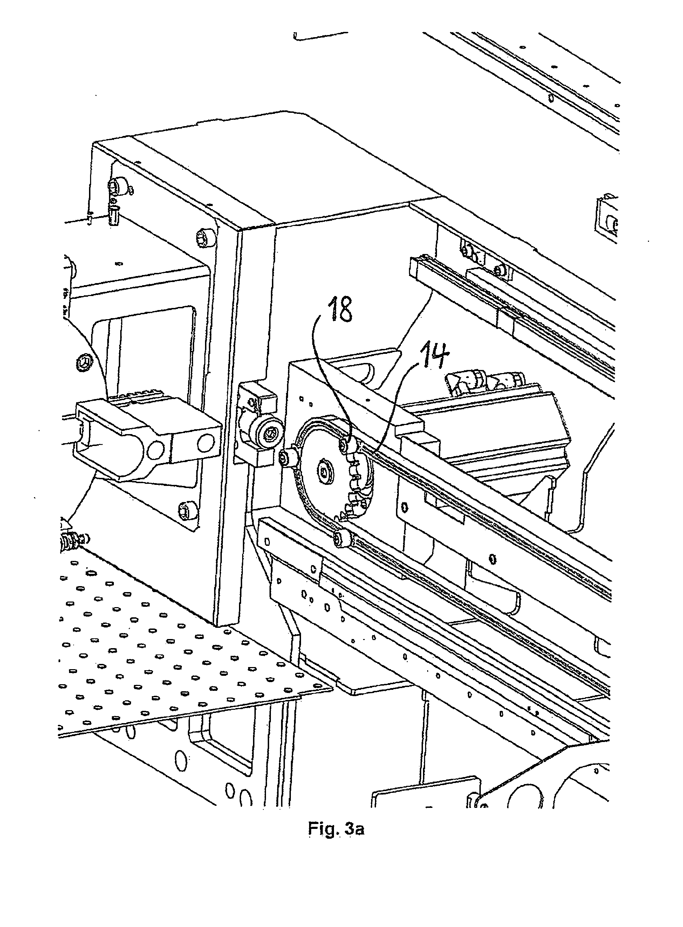

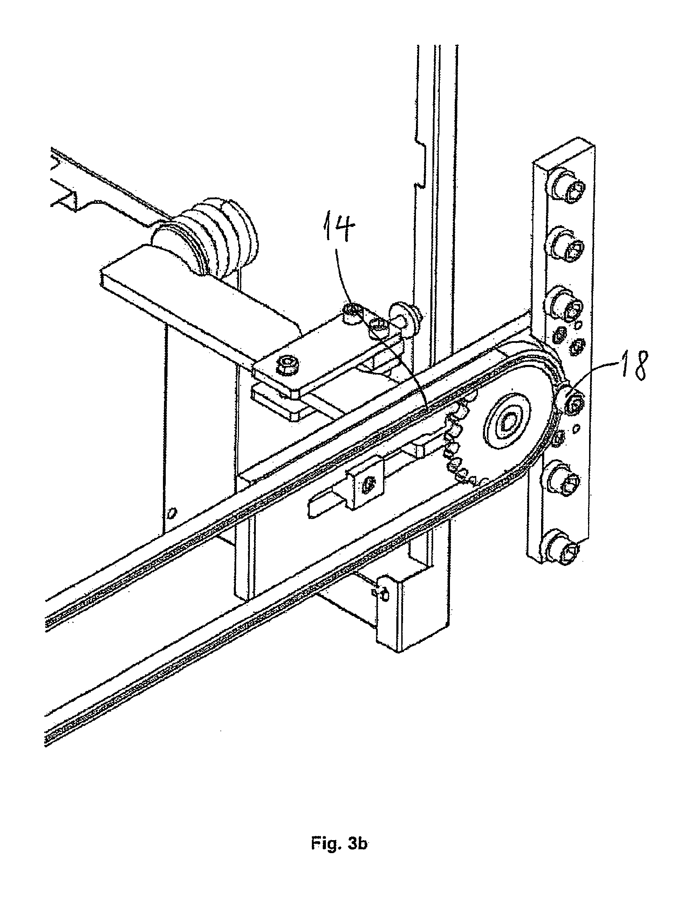

Alternativ oder zusätzlich zur Kopplung des Auflagers 5 an die Kette 14 mit Hilfe der Klinke 15 bzw. des Hakens 16 kann das Auflager 5 auch an in Fign. 3a,b dargestellten Mitnehmern 18 festgelegt werden, die an der Kette 14 angebracht sind, und die der Mitnahme des Werkstücktisches 7 dienen. Zu diesem Zweck kann das Auflager 5 (nicht gezeigte) Mitnehmer-Aufnahmen aufweisen, in welche einer oder mehrere der Mitnehmer 18 der Kette 14 eingreifen können, um das Auflager 5 an der Kette 14 festzulegen.

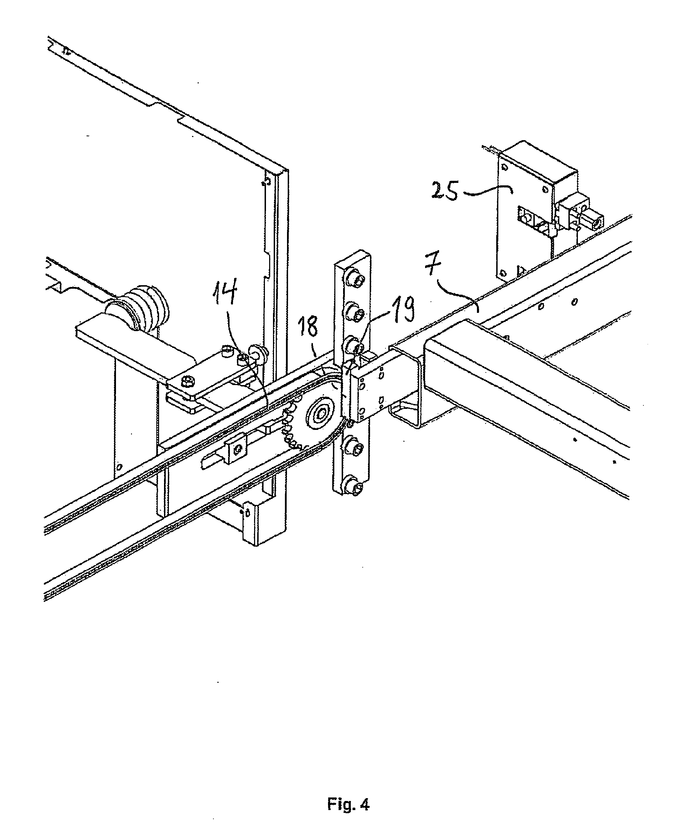

Derartige Mitnehmer-Aufnahmen in Form von Mitnehmer-Leisten 19 des Werkstücktischs 7 sind in **Fig. 4** dargestellt. Wie oben dargestellt wird zum Bewegen des Werkstücktischs 7 aus der in Fig. 1 dargestellten Be- und Entladeposition in den Bearbeitungsbereich 2 und umgekehrt der Kettenantrieb 8 genutzt. In der Be- und Entladeposition ist der Werkstücktisch 7 an einer Fixiereinheit 25 festgelegt, um ein ungewolltes Verschieben aus der Be- und Entladeposition zu verhindern. Zum Verbringen des Werkstücktischs 7 in den Bearbeitungsbereich 2 wird dieser von der Fixiereinheit 25 freigegeben und zunächst in eine Mitnahmeposition angehoben, in welcher der Mitnehmer 18 der Kette 14 in die Mitnehmer-Aufnahme 19 an dem Werkstücktisch 7 eingreift.

Durch Antreiben der Kette 14 wird der Werkstücktisch 7 in den Bearbeitungsbereich 2 hinein oder aus diesem herausgezogen. Ist die gewünschte Position erreicht, kann die Mitnahmeposition wieder verlassen werden, d.h. der Werkstücktisch 7 kann abgesenkt oder angehoben werden. Zum Auswechseln eines ersten Werkstücktisches 7 der an der Be- und Entladeposition angeordnet ist, gegen einen zweiten (nicht dargestellten) Werkstücktisch greift jeweils ein Mitnehmer 18 der Kette 14 in eine Mitnehmer-Aufnahme eines Werkstücktisches ein. Während der zweite, nicht gezeigte Werkstücktisch aus dem Bearbeitungsbereich 2 gezogen wird, wird der erste Werkstücktisch 7 in die Arbeitsposition bzw. den Bearbeitungsbereich 2 gezogen. Dies ist möglich, da sich die obere und die untere Hälfte der Kette 14 in entgegengesetzte Richtungen bewegen.

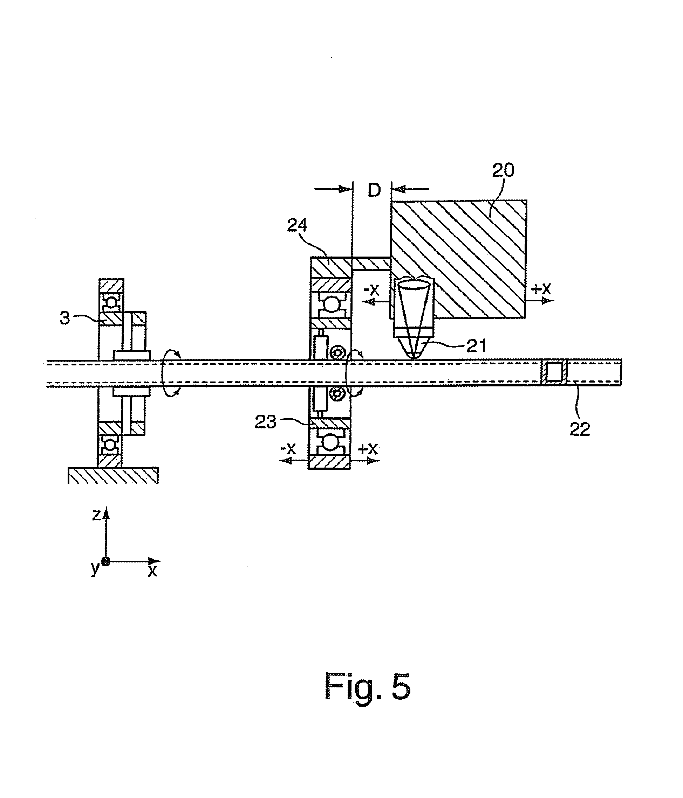

Alternativ zum Festlegen der als Auflager 5 ausgebildeten Stützeinrichtung an der Kette 14 des Kettenantriebs 8 ist es auch möglich, die Stützeinrichtung an einer anderen Verschiebeeinrichtung der Laserbearbeitungsmaschine 1 festzulegen, beispielsweise einem in X-Richtung verschiebbaren Querträger 20 (Brücke), an dem ein Laserbearbeitungskopf 21 der Laserbearbeitungsmaschine 1 in Querrichtung (Y-Richtung) verschiebbar gelagert ist, wie in **Fig. 5** dargestellt ist. Zur Stützung des rohrförmigen Werkstücks 22 dient in diesem Fall ein Durchschiebefutter 23, welches mittels eines Grundträgers 24 an dem Querträger 20 festgelegt ist und in einem konstanten Abstand zum Laserbearbeitungskopf 21 gehalten wird. Das Durchschiebefutter 23 weist eine Mehrzahl von Spannbacken mit Rollen auf, um der Drehung des Werkstücks 22 zu folgen.

Bei dem in Fig. 5 beschriebenen Beispiel ist der Abstand D zwischen dem Durchschiebefutter 23 und dem Querträger 20 konstant und kann während der Bearbeitung des rohrförmigen Werkstücks 22 nicht variiert werden. Durch die Verwendung unterschiedlich langer Grundträger 24 kann jedoch auch in diesem Fall vor der Bearbeitung eine Anpassung des Abstands D an einen jeweiligen Werkstücktyp erfolgen. Gegebenenfalls kann der Grundträger 24 auch teleskopartig ausgebildet sein, um eine Anpassung des Abstands D auch während der Bearbeitung zu ermöglichen.

Es versteht sich, dass an Stelle des Durchschiebefutters 23 auch ein Auflager 5 mit dem Querträger 20 verbunden werden kann, oder alternativ das Durchschiebefutter 23 an der Kette 14 des Kettenantriebs 8 festgelegt werden kann. In jedem Fall kann durch die oben beschriebenen Maßnahmen eine mitlaufende Rohrunterstützung bereitgestellt werden, die es ermöglicht, das Rohrschneiden bzw. Rohrbearbeiten bei Laserbearbeitungsmaschinen zum wahlweisen Bearbeiten von plattenartigen oder von rohrförmigen Werkstücken zu optimieren.

## Patentansprüche

1. Laserbearbeitungsmaschine (1), insbesondere Laser-Flachbettmaschine, zur wahlweisen Bearbeitung von plattenartigen oder von rohrförmigen Werkstücken (22), umfassend:
eine Verschiebeeinrichtung (8), an welcher ein Werkstücktisch (7) zur Auflage eines plattenartigen Werkstücks festlegbar ist, um den Werkstücktisch (7) in einen Bearbeitungsbereich (2) der Laserbearbeitungsmaschine (1) und aus diesem heraus zu bewegen,
eine Handhabungseinrichtung (3, 4, 5, 6, 23) zur Handhabung eines rohrförmigen Werkstücks (22) bei der Bearbeitung des rohrförmigen Werkstücks (22) in dem Bearbeitungsbereich (2), sowie
einen innerhalb des Bearbeitungsbereichs (2) bewegbaren Laserbearbeitungskopf (21),
wobei die Handhabungseinrichtung mindestens eine Stützeinrichtung (4, 5, 6, 23) zur Unterstützung des rohrförmigen Werkstücks (22) bei der Bearbeitung aufweist,
**dadurch gekennzeichnet,**
**dass** die Stützeinrichtung (5, 23) in Längsrichtung (X) des rohrförmigen Werkstücks (22) mindestens über 20%, bevorzugt mindestens über den halben Bearbeitungsbereich (2) gesteuert bewegbar ist, und dass
die Stützeinrichtung (5, 23) zur gesteuerten Bewegung in Längsrichtung (X) des rohrförmigen Werkstücks (22) an der Verschiebeeinrichtung (8) für den Werkstücktisch (7) festlegbar ist, weiter **gekennzeichnet durch** eine Steuerungseinrichtung (17) zur Kopplung der Bewegung des Laserbearbeitungskopfs (21) und der Stützeinrichtung (5, 23) in Längsrichtung (X) des rohrförmigen Werkstücks (22).

2. Laserbearbeitungsmaschine nach Anspruch 1, bei der die Verschiebeeinrichtung einen Kettenantrieb (8) aufweist.

3. Laserbearbeitungsmaschine nach Anspruch 2, bei welcher der Kettenantrieb (8) eine Kette (14) mit mindestens einem Mitnehmer (18) aufweist, an dem die Stützeinrichtung (5) festlegbar ist.

4. Laserbearbeitungseinrichtung nach Anspruch 2 oder 3, bei der zur Festlegung an einer Kette (14) des Kettenantriebs (8) die Stützeinrichtung (5) eine Kopplungseinrichtung (15, 16) aufweist, die mit der Kette (14) verhakt.

5. Laserbearbeitungseinrichtung nach einem der vorhergehenden Ansprüche, weiter umfassend: eine Führungseinrichtung (10, 11) zur Führung der Stützeinrichtung (5) bei der Verschiebung innerhalb des Bearbeitungsbereichs (2).

6. Laserbearbeitungseinrichtung nach einem der vorhergehenden Ansprüche, bei der die Stützeinrichtung ein Auflager (5) für das rohrförmige Werkstück (22) bildet.

7. Laserbearbeitungsmaschine nach einem der Ansprüche 1 bis 6, bei der die Stützeinrichtung ein Durchschiebefutter (23) für das rohrförmige Werkstück (22) bildet.

8. Laserbearbeitungsmaschine nach einem der vorhergehenden Ansprüche, weiter umfassend: ein drehbares Spannfutter (3) als Drehachse für das rohrförmige Werkstück (22).

9. Verfahren zum Umrüsten einer Laserbearbeitungsmaschine (1) zur Bearbeitung von plattenförmigen Werkstücken für die Bearbeitung von rohrförmigen Werkstücken (22), **gekennzeichnet durch** folgende Schritte.
Festlegen einer Stützeinrichtung (5, 23) zu Unterstützung eines rohrförmigen Werkstücks (22) an einer Verschiebeeinrichtung (8, 20) der Laserbearbeitungsmaschine (1) zum gesteuerten Bewegen der Stützeinrichtung (5, 23) in Längsrichtung (X) des rohrförmigen Werkstücks (22) mindestens über 20%, bevorzugt mindestens über den halben Bearbeitungsbereich (2), wobei die Stützeinrichtung (5, 23) zum gesteuerten Bewegen in Längsrichtung (X) des rohrförmigen Werkstücks (22) an einer Verschiebeeinrichtung (8) für eine Werkstückauflage (7) festgelegt wird und wobei eine gekoppelte Bewegung eines Laserbearbeitungskopfs (21) der Laserbearbeitungsmaschine (1) und der Stützeinrichtung (5, 23) in Längsrichtung (X) des rohrförmigen Werkstücks (22) durchgeführt wird.

## Claims

1. Laser processing machine (1), in particular a flat bed laser machine, for selectively processing plate-like or pipe-like workpieces (22), comprising:
a displacement device (8) to which a workpiece table (7) for supporting a plate-like workpiece can be secured in order to move the workpiece table (7) into and out of a processing range (2) of the laser processing machine (1),
a handling device (3, 4, 5, 6, 23) for handling a pipe-like workpiece (22) when the pipe-like workpiece (22) is processed in the processing range (2), as well as
a laser processing head (21) which is moveable within the processing range (2),
the handling device having at least one support device (4, 5, 6, 23) for supporting the pipe-like workpiece (22) during the processing operation,
**characterised in that**
the support device (5, 23) can be moved in a controlled manner in the longitudinal direction (X) of the pipe-like workpiece (22) over at least 20%, preferably over at least half of the processing range (2), and that the support device (5, 23) can be secured to the displacement device (8) for the workpiece table (7) for a controlled movement in the longitudinal direction (X) of the pipe-like workpiece (22), further **characterized by** a control device (17) for coupling the movement of the laser processing head (21) and of the support device (5, 23) in the longitudinal direction (X) of the pipe-like workpiece (22).

2. Laser processing machine according to claim 1, wherein the displacement device has a chain drive (8).

3. Laser processing machine according to claim 2, wherein the chain drive (8) has a chain (14) having at least one carrier (18), to which the support device (5) can be secured.

4. Laser processing machine according to claim 2 or claim 3, wherein, for being secured to a chain (14) of the chain drive (8), the support device (5) has a coupling device (15, 16) which engages with the chain (14).

5. Laser processing machine according to any one of the preceding claims, further comprising: a guide device (10, 11) for guiding the support device (5) during displacement within the processing range (2).

6. Laser processing machine according to any one of the preceding claims, wherein the support device forms a support (5) for the pipe-like workpiece (22).

7. Laser processing machine according to any one of claims 1 to 6, wherein the support device forms an insertion type chuck (23) for the pipe-like workpiece (22).

8. Laser processing machine according to any one of the preceding claims, further comprising: a rotatable clamping chuck (3) acting as an axis of rotation for the pipe-like workpiece (22).

9. Method for retrofitting a laser processing machine (1) from processing plate-like workpieces to processing pipe-like workpieces (22), **characterized by** the following steps:
securing a support device (5, 23) for supporting a pipe-like workpiece (22) to a displacement device (8, 20) of the laser processing machine (1) for the controlled movement of the support device (5, 23) in a longitudinal direction (X) of the pipe-like workpiece (22) over at least 20%, preferably over at least half of the processing range (2), wherein the support device (5, 23) is secured to a displacement device (8) for a workpiece table (7) for controlled movement in a longitudinal direction (X) of the pipe-like workpiece (22), and wherein a coupled movement of a laser processing head (21) of the laser processing machine (1) and of the support device (5, 23) in a longitudinal direction (X) of the pipe-like workpiece (22) is performed.

## Revendications

1. Machine d'usinage au laser (1), en particulier machine de découpe au laser à banc plat, pour l'usinage au choix de pièces (22) de forme plate ou tubulaire, comprenant :
un dispositif de déplacement (8) sur lequel peut être fixée une table porte-pièce (7) destinée à supporter une pièce de forme plate, pour déplacer la table porte-pièce (7) dans une zone d'usinage (2) de la machine d'usinage au laser (1) et hors de celle-ci,
un dispositif de manipulation (3, 4, 5, 6, 23) pour manipuler une pièce tubulaire (22) lors de l'usinage de la pièce tubulaire (22) dans la zone d'usinage (2), et
une tête d'usinage au laser (21) mobile à l'intérieur de la zone d'usinage (2),
le dispositif de manipulation présentant au moins un dispositif de support (4, 5, 6, 23) pour soutenir la pièce tubulaire (22) lors de l'usinage,
**caractérisée en ce**
**que** le dispositif de support (5, 23) peut être déplacé de manière commandée dans la direction longitudinale (X) de la pièce tubulaire (22) au moins sur 20 %, de préférence au moins sur la moitié de la zone d'usinage (2), et que
le dispositif de support (5, 23) peut être fixé au dispositif de déplacement (8) pour la table porte-pièce (7) pour le déplacement commandé dans la direction longitudinale (X) de la pièce tubulaire (22), **caractérisée en outre par** un dispositif de commande (17) pour coupler le déplacement de la tête d'usinage au laser (21) et du dispositif de support (5, 23) dans la direction longitudinale (X) de la pièce tubulaire (22).

2. Machine d'usinage au laser selon la revendication 1, dans laquelle le dispositif de déplacement présente un entraînement à chaîne (8).

3. Machine d'usinage au laser selon la revendication 2, dans laquelle l'entraînement à chaîne (8) présente une chaîne (14) avec au moins un élément d'entraînement (18) auquel le dispositif de support (5) peut être fixé.

4. Machine d'usinage au laser selon la revendication 2 ou 3, dans lequel, pour la fixation à une chaîne (14) de l'entraînement à chaîne (8), le dispositif de support (5) présente un dispositif d'accouplement (15, 16) qui s'accroche à la chaîne (14).

5. Machine d'usinage au laser selon l'une des revendications précédentes, comprenant en outre : un dispositif de guidage (10, 11) pour guider le dispositif de support (5) lors du déplacement à l'intérieur de la zone d'usinage (2).

6. Machine d'usinage au laser selon l'une des revendications précédentes, dans lequel le dispositif de support forme un appui (5) pour la pièce tubulaire (22).

7. Machine d'usinage au laser selon l'une des revendications 1 à 6, dans laquelle le dispositif de support forme un mandrin à passage (23) pour la pièce tubulaire (22).

8. Machine d'usinage au laser selon l'une des revendications précédentes, comprenant en outre : un mandrin de serrage rotatif (3) comme axe de rotation pour la pièce tubulaire (22).

9. Procédé pour rééquiper une machine d'usinage au laser (1) destinée à l'usinage de pièces plates pour l'usinage de pièces tubulaires (22), **caractérisé par** les étapes suivantes :
fixation d'un dispositif de support (5, 23) destiné à soutenir une pièce tubulaire (22) à un dispositif de déplacement (8, 20) de la machine d'usinage au laser (1) permettant un déplacement commandé du dispositif de support (5, 23) dans la direction longitudinale (X) de la pièce tubulaire (22) au moins sur 20 %, de
préférence au moins sur la moitié de la zone d'usinage (2), le dispositif de support (5, 23) étant fixé à un dispositif de déplacement (8) pour un support de pièce (7) pour le déplacement commandé dans la direction longitudinale (X) de la pièce tubulaire (22) et un déplacement couplé d'une tête d'usinage au laser (21) de la machine d'usinage au laser (1) et du dispositif de support (5, 23) étant effectué dans la direction longitudinale (X) de la pièce tubulaire (22).
